(19) Europäisches Patentamt / European Patent Office / Office européen des brevets

(11) **EP 4 553 356 A1**

(12) **EUROPEAN PATENT APPLICATION**
published in accordance with Art. 153(4) EPC

(43) Date of publication:
14.05.2025   Bulletin 2025/20

(21) Application number: 23835229.8

(22) Date of filing: 12.06.2023

(51) International Patent Classification (IPC):
*F16K 17/30* (2006.01)    *F16K 3/24* (2006.01)
*F16K 31/363* (2006.01)

(52) Cooperative Patent Classification (CPC):
**F16K 3/24; F16K 17/30; F16K 31/363**

(86) International application number:
**PCT/JP2023/021679**

(87) International publication number:
**WO 2024/009693 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   08.07.2022   JP 2022110310

(71) Applicant: Eagle Industry Co., Ltd.
Minato-ku
Tokyo 105-8587 (JP)

(72) Inventors:
• SHIMADA Yoshiyuki
  Tokyo 105-8587 (JP)
• MIYATA Takeshi
  Tokyo 105-8587 (JP)
• SATO Koji
  Tokyo 105-8587 (JP)
• SEKI Tomoki
  Tokyo 105-8587 (JP)

(74) Representative: **WSL Patentanwälte Partnerschaft mbB**
**Kaiser-Friedrich-Ring 98**
**65185 Wiesbaden (DE)**

(54) **VALVE**

(57)   To provide a valve in which a spool smoothly operates.

A valve 1 includes: a housing 2; a spool 3 having a throttle port 34a, disposed in the housing 2 to be movable in an axial direction, and partitioning off the housing 2 into a primary chamber S1 and a secondary chamber S2; and a biasing member 4 configured to bias the spool 3 toward a primary chamber S1 side in an axial direction, wherein the spool 3 operates in the axial direction due to a pressure difference between the primary chamber S1 and the secondary chamber S2, and the biasing member 4 is disposed on the primary chamber S1 side or a secondary chamber S2 side with respect to the throttle port 34a.

Fig.1

EP 4 553 356 A1

**Description**

{TECHNICAL FIELD}

The present invention relates to a valve, for example a valve that controls a flow rate of fluid flowing between a primary chamber and a secondary chamber.

{BACKGROUND ART}

A valve used in various industrial fields to control working fluid includes a valve seat and a valve body that can be separated from and come into contact with the valve seat, and an opening degree of the valve can be adjusted to control the pressure and flow rate of the working fluid. As such a valve, a spool valve is known in which a spool moves parallel to an opening as a valve seat.

A spool valve of Patent Citation 1 includes a valve main body, a cylindrical spool, a check spring, and a pressure compensating spring. The cylindrical spool is disposed in the valve main body to be movable in an axial direction. In addition, the cylindrical spool has a partition wall partitioning the inside of the spool into a check spring chamber and a pressure compensating spring chamber on opposite sides in the axial direction, thereby, the check spring is disposed in the check spring chamber, and the pressure compensating spring is disposed in the pressure compensating spring chamber. The cylindrical spool is balanced in a neutral position.

In addition, the valve main body is provided with a first flow path extending from a first port and communicating between the check spring chamber and a flow rate setting throttle valve, a second flow path communicating between the pressure compensating spring chamber and a second port, and a third flow path communicating between the throttle valve and the pressure compensating spring chamber. In addition, the cylindrical spool is provided with an inlet/outlet hole corresponding to the third flow path and a throttle hole corresponding to the second flow path.

When the fluid flows from the first port into the first flow path, the fluid flows through the throttle valve, the third flow path, the inlet/outlet hole, the pressure compensating spring chamber, the throttle hole, and the second flow path, and flows out to the second port. At this time, the cylindrical spool moves in the axial direction depending on the pressure difference between the check spring chamber and the pressure compensating spring chamber to adjust the opening degree of the throttle hole. Accordingly, even if the pressure difference between the check spring chamber and the pressure compensating spring chamber fluctuates, the flow rate to the second port can be kept constant.

On the other hand, when the fluid flows from the second port into the second flow path, the cylindrical spool moves toward the check spring chamber side, and the inlet/outlet hole and the check spring chamber are directly communicated. Accordingly, the fluid flows through the second flow path, the throttle hole, the pressure compensation spring chamber, the inlet/outlet hole, and the check spring chamber, and flows out to the first port. At this time, the inlet/outlet hole is fully open and is communicated with the check spring chamber, so the flow rate to the first port is not limited.

{CITATION LIST}

{Patent Literature}

Patent Citation 1: Microfilm of JP 1987-025137 (JP 04-007415 Y) (Page 2, FIG. 1)

{SUMMARY OF INVENTION}

{Technical Problem}

However, in a spool valve such as that described in Patent Citation 1, the pressure compensation spring is disposed to cross the inlet/outlet hole and throttle hole that are provided to extend through the cylindrical spool in a radial direction, so there is a risk that the flow of fluid entering and exiting the inlet/outlet hole and the throttle hole will be obstructed by the pressure compensation spring, or that the pressure compensation spring will be deformed in a bending direction due to the flow of fluid.

The present invention has been made in view of such problems, and an object of the present invention is to provide a valve in which a spool smoothly operates.

{Solution to Problem}

In order to solve the foregoing problems, a valve according to the present invention includes: a housing; a spool having a throttle port, disposed in the housing to be movable in an axial direction, and partitioning off the housing into a primary chamber and a secondary chamber; and a biasing member configured to bias the spool toward a primary chamber side in an axial direction, wherein the spool operates in the axial direction due to a pressure difference between the primary chamber and the secondary chamber, and the biasing member is disposed on the primary chamber side or a secondary chamber side with respect to the throttle port. According to the aforesaid features of the present invention, the flow of fluid flowing out from the throttle port of the spool can be prevented from being obstructed by the biasing member. In addition, the biasing member can be prevented from being deformed in the radial direction by the fluid flowing out from the throttle port of the spool. Therefore, it is not necessary to select the biasing member based on the requirements of the fluid, and the biasing member can be freely designed.

It may be preferable that the spool has a step portion with which an end of the biasing member comes into contact. According to this preferable configuration, a portion of the biasing member can be disposed to be overlapped with the spool in the axial direction, so that the flow of fluid flowing out from the throttle port can be reliably prevented from being obstructed by the biasing member and the axial dimension of the valve can be shortened.

It may be preferable that the step portion is provided on an inner peripheral surface of the spool. According to this preferable configuration, the biasing member can be disposed inside the spool, so that the outer peripheral surface of the spool, which is guided by the inner peripheral surface of the housing, can be made large.

It may be preferable that the spool is further provided with an open-close port that switches a communication state between the primary chamber and the secondary chamber, and the biasing member is disposed on the secondary chamber side with respect to the open-close port. According to this preferable configuration, interference between the fluid flowing through the open-close port and the biasing member can be prevented. The flow rate adjustment mechanism and the open-close mechanism can be integrated and compactly configured with a single spool.

It may be preferable that the valve further includes primary chamber side biasing member configured to bias the spool toward the secondary chamber side in the axial direction, wherein the throttle port and the primary chamber are in communication with each other via a flow path that bypasses the primary chamber side biasing member. According to this preferable configuration, interference between the fluid flowing between the throttle port and the primary chamber and the primary chamber side biasing member can be prevented.

{BRIEF DESCRIPTION OF DRAWINGS}

FIG. 1 is a longitudinal sectional view illustrating a valve according to a first embodiment of the present invention.
FIG. 2 is a diagram illustrating the valve with hydraulic symbols in the first embodiment.
FIG. 3 is a longitudinal sectional view illustrating the state of the valve in a control flow stream in the first embodiment.
FIG. 4 is an enlarged schematic view illustrating an amount of displacement X in the first embodiment.
FIG. 5 is a graph illustrating the relationship between a differential pressure across an orifice and an opening portion and a flow rate in the first embodiment.
FIG. 6 is a longitudinal sectional view illustrating the state of the valve in a free flow stream in the first embodiment.
FIG. 7 is a longitudinal sectional view illustrating a valve according to a second embodiment of the present invention.

{DESCRIPTION OF EMBODIMENTS}

Modes for implementing a valve according to the present invention will be described below based on embodiments. Incidentally, in the embodiments, a flow rate control valve will be described as an example.

{First embodiment}

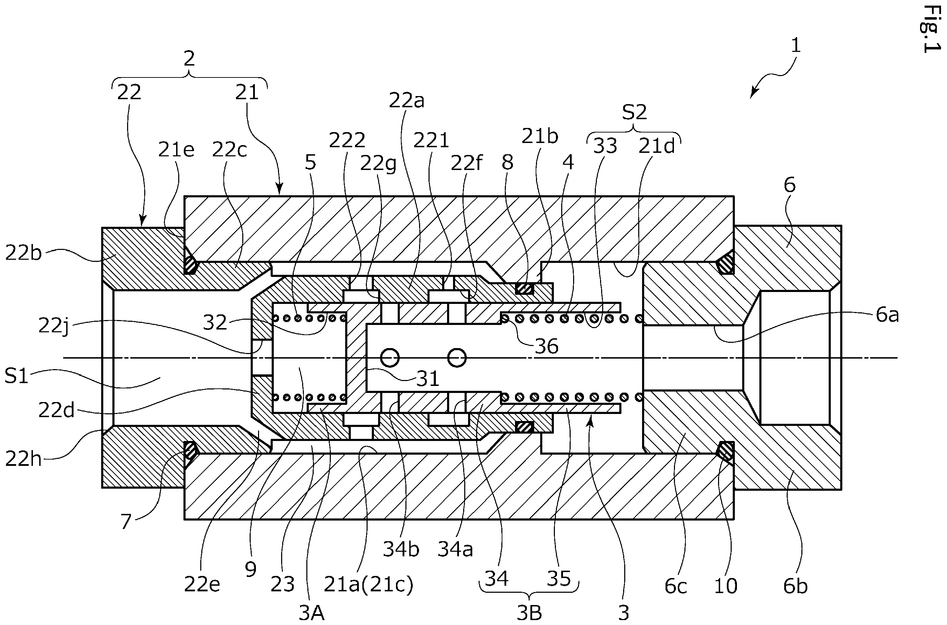

A flow rate control valve as a valve according to the first embodiment of the present invention will be described with reference to FIGS. 1 to 6. Hereinafter, the description will be made based on the assumption that the left side of the drawing sheet of FIG. 1 is a left side of the flow rate control valve and the right side of the drawing sheet of FIG. 1 is a right side of the flow rate control valve. In addition, the description will be made based on the assumption that the left side of the flow rate control valve is a primary chamber side and the right side of the flow rate control valve is a secondary chamber side.

As illustrated in FIG. 1, a flow rate control valve 1 is a spool type flow rate control valve, and is incorporated in a hydraulic circuit. Incidentally, the flow rate control valve 1 is installed to a mounting hole in a valve housing on a device side when in use.

The flow rate control valve 1 mainly includes a housing 2, a flow rate control spool 3 (hereinafter simply referred to as the spool 3), a flow rate control spring 4 as a biasing member, a check spring 5 as a primary chamber side biasing member, and a plug 6.

The housing 2 includes a first tubular member 21 and a second tubular member 22.

The first tubular member 21 has a through-hole 21a extending through in an axial direction, and an annular protruded portion 21b protruding annularly toward a radially inner side in the substantially central portion in the axial direction. Namely, a recessed portion 21c, which is open to the left side, is provided on the left side with respect to the annular protruded portion 21b of the first tubular member 21, and a recessed portion 21d, which is open to the right side, is provided on the right side with respect to the annular protruded portion 21b.

The second tubular member 22 is connected to the left side of the first tubular member 21 in a sealed manner by screwing, and the plug 6 is connected to the right side thereof in a sealed manner by screwing.

The second tubular member 22 includes a small-diameter portion 22a, a large-diameter portion 22b, and a screwing portion 22c.

The small-diameter portion 22a has a smaller diameter than the through-hole 21a of the first tubular member 21, and is inserted into the through-hole 21a from the left side.

In addition, the large-diameter portion 22b has a larger diameter than the through-hole 21a, and comes into contact with a left side end surface 21e of the first tubular member 21 to determine the position of the second tubular member 22 in an insertion direction.

The screwing portion 22c is screwed into an internal thread portion provided on an inner peripheral surface of the first tubular member 21.

Specifically, an O-ring 7 is disposed at a corner of the second tubular member 22 formed by the large-diameter portion 22b and the screwing portion 22c, and the O-ring 7 seals a gap between the first tubular member 21 and the second tubular member 22. In addition, an O-ring 10 is disposed at a corner of the plug 6 formed by a large-diameter portion 6b and a screwing portion 6c, and the O-ring 10 seals a gap between the first tubular member 21 and the plug 6. In addition, an O-ring 8 is disposed in an annular groove of the second tubular member 22 that is formed at the right end portion of the small-diameter portion 22a and is open in a radially outward direction, and the O-ring 8 seals a gap between an outer peripheral surface of the right end portion of the small-diameter portion 22a and an inner peripheral surface of the annular protruded portion 21b.

An annular space 23 is formed between the outer peripheral surface of the small-diameter portion 22a and the inner peripheral surface of the first tubular member 21, the annular space being interposed between the O-rings 7 and 8.

A partition wall 22d is formed between the small-diameter portion 22a and the screwing portion 22c to partition the internal space of the second tubular member 22 into opposite sides in the axial direction. The partition wall 22d has a through-hole 22j formed at the center and extending through the partition wall 22d in the axial direction.

A primary chamber S1 is formed inside a portion of the second tubular member 22 on the left side with respect to the partition wall 22d. The primary chamber S1 is in communication with a primary side inlet 22h that is open to the left side of the second tubular member 22.

In addition, a plurality of communication holes 22e communicating between the space 23 and the primary chamber S1 is formed in a circumferential direction in the vicinity of the radially outer side of the partition wall 22d of the second tubular member 22. The space 23 and the communication holes 22e constitute a flow path that communicates between throttle ports 34a as will be described later and the primary chamber S1.

In addition, the small-diameter portion 22a is provided with a first annular groove 22f and an orifice 221, and a second annular groove 22g and a hole 222.

The first annular groove 22f and the second annular groove 22g are grooves that are open to the radially inner side of the small-diameter portion 22a and are provided spaced apart from each other in the axial direction.

The orifice 221 is provided to communicate between the first annular groove 22f on the right side and the space 23.

The hole 222 is provided to communicate between the second annular groove 22g on the left side and the space 23.

The spool 3 is disposed inside the small-diameter portion 22a to be slidable in the axial direction.

The spool 3 is a tubular body, and has a partition wall 31 formed on the left side with respect to the spool 3 to partition the internal space of the spool 3 into opposite sides in the axial direction.

The spool 3 has a recessed portion 32 that is open to the left side and is formed by the partition wall 31 and a tubular portion 3A on the left side with respect to the partition wall 31, and a recessed portion 33 that is open to the right side and is formed by the partition wall 31 and a tubular portion 3B on the right side with respect to the partition wall 31.

A check spring chamber 9 is formed by the recessed portion 32 of the spool 3 and a recessed portion formed by the small-diameter portion 22a and the partition wall 22d of the second tubular member 22, and the check spring 5 as will be described later is disposed in the check spring chamber 9. The check spring chamber 9 is in communication with the primary chamber S1 through the through-hole 22j.

The portion 3B includes a thick wall portion 34 formed on the left side and a thin wall portion 35 formed on the right side. The outer peripheral surface of the thick wall portion 34 and the outer peripheral surface of the thin wall portion 35 are flat and continuous. The inner peripheral surface of the thick wall portion 34 is located on the radially inner side with respect to the inner peripheral surface of the thin wall portion 35. The right end portion of the thick wall portion 34 forms a step portion 36 projecting toward a radially inner side with respect to the thin wall portion 35.

The thick wall portion 34 is provided with a plurality of the throttle ports 34a and a plurality of open-close ports 34b formed in the circumferential direction.

In addition, the recessed portion 33 of the spool 3 and the recessed portion 21d of the first tubular member 21 constitute a secondary chamber S2. The secondary chamber S2 is in communication with a secondary side inlet/outlet 6a extending through the plug 6.

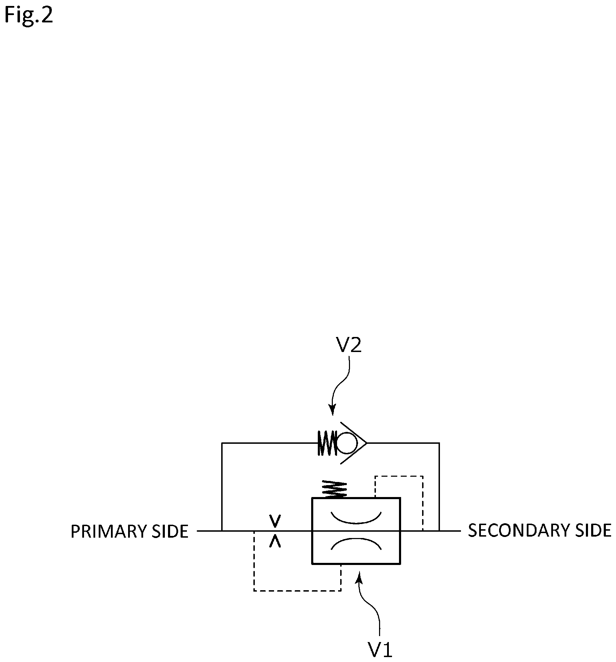

Referring to FIG. 2, the throttle ports 34a of the spool 3 and the first annular groove 22f and the orifice 221 of the second tubular member 22 constitute a flow rate adjustment mechanism V1. In addition, the open-close ports 34b of the spool 3 and the second annular groove 22g and the hole 222 of the second tubular member 22 constitute an open-close mechanism V2.

Returning to FIG. 1, the flow rate control spring 4 is a coil spring and is disposed between the step portion 36 of the spool 3 and the plug 6. Namely, the flow rate control spring 4 biases the spool 3 toward the left side.

The check spring 5 is a coil spring and is disposed in the check spring chamber 9, in other words, between the partition wall 31 of the spool 3 and the partition wall 22d of the second tubular member 22. Namely, the check spring 5 biases the spool 3 toward the right side.

When no oil as fluid flows through the flow rate control valve 1, the spool 3 is disposed in a neutral position due to the biasing forces of the flow rate control spring 4 and the check spring 5 (see FIG. 1). In the neutral position of the spool 3, the throttle ports 34a are fully open and in communication with the first annular groove 22f, and the open-close ports 34b are not in communication with the second annular groove 22g. Incidentally, the flow rate control spring 4 and the check spring 5 are balanced by a biasing force F1.

Next, the operation of the flow rate control valve 1 will be described.

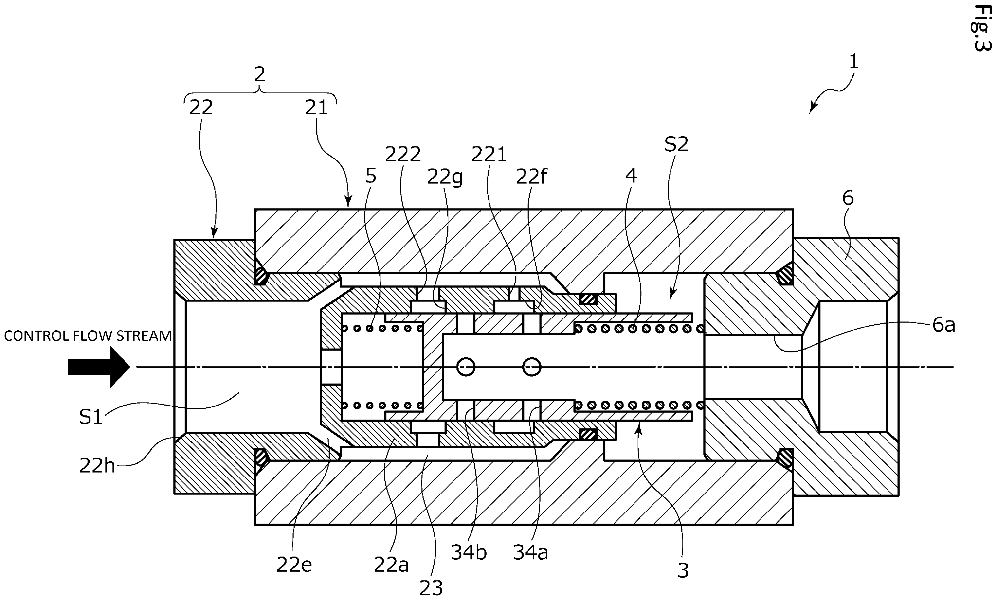

First, the operation of the flow rate control valve 1 in a control flow stream where oil flows in from the primary side inlet 22h and flows out to the secondary side inlet/outlet 6a will be described with reference to FIG. 3.

The oil flowing in from the primary side inlet 22h flows through the primary chamber S1, the communication hole 22e, the space 23, the orifice 221, the first annular groove 22f, the throttle ports 34a, and the secondary chamber S2 and flows out to the secondary side inlet/outlet 6a.

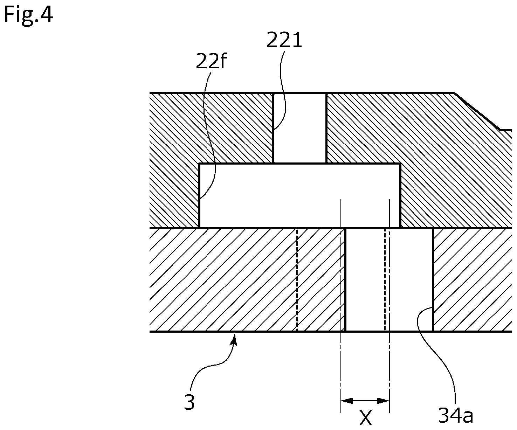

At this time, the pressure in the primary chamber S1 is slightly higher than the pressure in the secondary chamber S2, and the spool 3 is balanced in the state illustrated in FIG. 4 where the spool 3 is displaced to the right by an amount of displacement X from the state in which no oil flows. Incidentally, at this time, the open-close ports 34b are closed by the small-diameter portion 22a of the second tubular member 22. In addition, in FIG. 4, the throttle port 34a in the state in which no oil flows is illustrated by dashed lines. The left one of the two dashed-dotted lines illustrating the amount of displacement X is a longitudinal line extending through the center of the throttle port 34a in the state in which no oil flows, and the right one is a longitudinal line extending through the center of the throttle port 34a after the spool 3 is displaced to the right.

Here, S represents the cross-sectional area of the spool 3, K1 represents the spring constant of the flow rate control spring 4, and K2 represents the spring constant of the check spring **5.** In addition, the following equation (1) is obtained from the orifice equation wherein Q represents the flow rate flowing through the orifice 221, M represents the cross-sectional area of the orifice 221, P1 represents the pressure before flowing into the orifice 221, and P2 represents the pressure after flowing into the orifice 221:

$$Q = C \cdot M \cdot \sqrt{(P1 - P2)} \quad \text{wherein C is a constant} \quad (1).$$

In addition, the following equation (2) is obtained as in the equation (1) wherein N represents the opening area of the throttle ports 34a and P3 represents the pressure in the secondary chamber S2:

$$Q = C \cdot N \cdot \sqrt{(P2 - P3)} \quad \text{wherein C is a constant} \quad (2).$$

Therefore, the following equation (3) is obtained from the equations (1) and (2):

$$Q = C \cdot (M \cdot N / \sqrt{(M^2 + N^2)}) \cdot \sqrt{(P1 - P3)} \quad (3).$$

In addition, it is assumed that the following force balance equation (4) holds in the axial direction of the spool 3:

$$P1 \cdot S + (F1 - K2 \cdot X) = P3 \cdot S + (F1 + K1 \cdot X)$$

$$\therefore \ P1 - P3 = (K1 + K2) \cdot X/S \ \ (4).$$

From this state, when a flow rate Qe exceeding a flow rate Q flows through the orifice 221, the value of the differential pressure (P1-P3) in the equation (3) also increases. As the value of the differential pressure (P1-P3) in the equation (4) increases, the value of the amount of displacement X also increases.

As illustrated in FIG. 4, as the amount of displacement X increases, an opening area N of the throttle ports 34a decreases. As a result, according to the equation (3), the value of $(M \cdot N/\sqrt{(M^2+N^2)})$ decreases and the oil is throttled, so the flow rate Qe decreases, and eventually, a balance is achieved when the flow rate is Q and the differential pressure (P1-P3) across the orifice 221 and the throttle ports 34a always remains constant.

Namely, if the flow rate exceeding the flow rate Q tries to flow through the orifice 221, the spool 3 operates to prevent the certain flow rate Q or more from flowing.

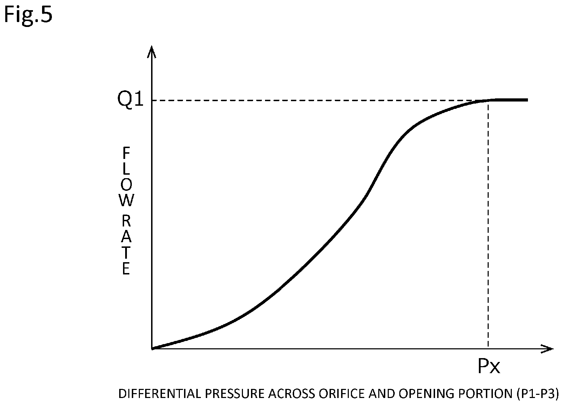

This is illustrated on a graph in FIG. 5 wherein Q1 represents a certain constant flow rate and Px represents a constant differential pressure of P1-P3.

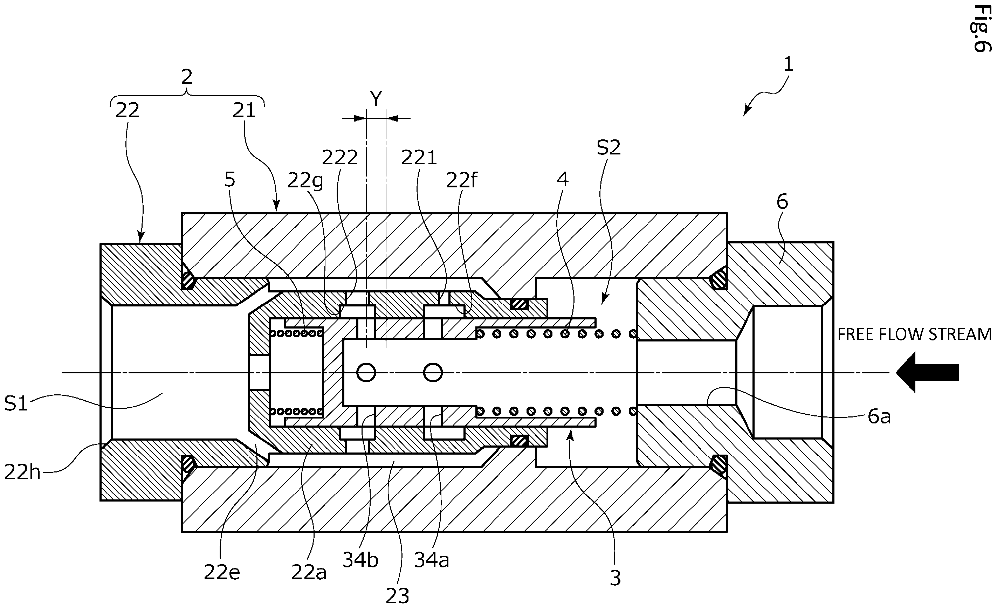

Next, the operation of the flow rate control valve 1 in a free flow stream where oil flows in from the secondary side inlet/outlet 6a and flows out to the primary side inlet 22h will be described with reference to FIG. 6.

Oil flowing in from the secondary side inlet/outlet 6a branches from the secondary chamber S2 to the open-close ports 34b or the throttle ports 34a. The oil flowing into the open-close ports 34b flows into the space 23 through the flow path of the second annular groove 22g and the hole 222. The oil flowing into the throttle ports 34a flows into the space 23 through the flow path of the first annular groove 22f and the orifice 221. The oil flowing into the space 23 flows through the communication hole 22e and the primary chamber S1 and flows out to the primary side inlet 22h.

Q' represents the flow rate of oil flowing into the secondary side inlet/outlet 6a, P1' represents the pressure in the secondary chamber S2, and P3' represents the pressure in the primary chamber S1, and the spool 3 is balanced in the state where the spool 3 is displaced to the left by an amount of displacement Y from a state in which no oil flows. At this time, the following force balance equation (5) holds in the axial direction of the spool 3:

$$P1' \cdot S + (F1 - K1 \cdot Y) = P3' \cdot S + (F1 + K2 \cdot Y)$$

$$\therefore \ P1' - P3' = (K1 + K2) \cdot Y/S \ \ (5).$$

In addition, the following equations (6) to (8) are obtained from the orifice equation wherein Q1' represents the flow rate flowing through the throttle ports 34a, Q2' represents the flow rate flowing through the open-close ports 34b, M represents the cross-sectional area of the orifice 221, N represents the opening area of the throttle ports 34a, and R represents the opening area of the open-close ports 34b.

$$Q1' = C \cdot (M \cdot N/\sqrt{(M^2+N^2)}) \cdot \sqrt{(P1'-P3')}$$

wherein C is a constant (6)

$$Q2' = C \cdot R \cdot \sqrt{(P1'-P3')}$$

wherein C is a constant (7)

$$Q' = Q1' + Q2' \ \ (8)$$

Therefore, the following equation (9) is obtained from the equations (6) to (8):

$$Q' = C \cdot ((M \cdot N/\sqrt{(M^2+N^2)}) + R) \cdot \sqrt{(P1'-P3')} \ \ (9).$$

The case where a flow rate Qe' exceeding the flow rate Q' flows in from the secondary side inlet/outlet 6a from this state will be discussed. When the flow rate Qe' flows in, the differential pressure (P1'-P3') in the equation (9) described above increases, and when the value of the differential pressure (P1'-P3') in the equation (5) increases, the value of the displacement Y also increases. However, unlike the control flow stream described above, the opening areas of the throttle ports 34a and the open-close ports 34b in the spool 3 are not limited.

As described above, the flow rate control spring 4 is disposed on the secondary chamber S2 side with respect to the throttle ports 34a. Accordingly, the flow rate control spring 4 is disposed to be shifted toward the right side in the axial direction with respect to the throttle ports 34a, so that the flow of oil entering and exiting the throttle ports 34a can be prevented from being obstructed by the flow rate control spring 4. In addition, the flow rate control spring 4 can be prevented from being deformed in the radial direction by the flow of oil entering and exiting the throttle ports 34a.

Therefore, it is not necessary that the number of turns or wire diameter of the flow rate control spring 4 is considered and selected based on the requirements of oil, and the flow rate control spring 4 can be freely designed.

In addition, the spool 3 has the step portion 36 with which the end of the flow rate control spring 4 comes into. Accordingly, the flow rate control spring 4 can be disposed to be overlapped with the inner diameter side end portions of the throttle ports 34a in the axial direction, in other words, the flow rate control spring 4 can be disposed on the radially outer side with respect to the inner peripheral surface of the thick wall portion 34 where the throttle ports 34a are open, so that the flow of the fluid flowing out from the throttle ports 34a can be reliably prevented from being obstructed by the flow rate control spring **4**. In addition, a part of the flow rate control spring 4 can be overlapped with the spool 3 in the radial direction, so that the axial dimension of the flow rate control valve 1 can be shortened. In addition, the misalignment of the axial centers of the spool 3 and the flow rate control spring 4 can be suppressed.

In addition, the step portion 36 is provided on the inner peripheral surface of the spool 3, and the flow rate control spring 4 can be disposed inside the spool 3. Accordingly, the outer peripheral surface of the spool 3, which is guided by the inner peripheral surface of the small-diameter portion 22a of the second tubular member 22, can be made large in the axial direction, thereby stabilizing the movement of the spool 3 in the axial direction.

In addition, the spool 3 is provided with the open-close ports 34b that switch the communication state with the primary chamber S1, and the flow rate control spring 4 is disposed on the secondary chamber S2 side with respect to the open-close ports 34b. Accordingly, interference between the oil flowing through the open-close ports 34b and the flow rate control spring 4 can be prevented.

In addition, in the case of the flow rate control valve 1, the flow rate adjustment mechanism V1 with the throttle ports 34a and the open-close mechanism V2 with the open-close ports 34b can be integrated and compactly configured with the single spool 3.

In addition, since the flow rate control valve 1 includes the check spring 5 that biases the spool 3 toward the secondary chamber S2 side in the axial direction, the axial movement of the spool 3 in the axial direction is stabilized, allowing the flow rate adjustment mechanism V1 and the open-close mechanism V2 to function with high accuracy.

In addition, the throttle ports 34a and the primary chamber S1 are in communication with each other through the space 23 and the communication hole 22e, which bypass the check spring 5. Accordingly, interference between the oil flowing between the throttle ports 34a and the primary chamber S1 and the check spring 5 can be prevented.

In addition, the housing 2 includes the first tubular member 21 and the second tubular member 22, and the space 23 is formed between the first tubular member 21 and the second tubular member 22. In such a manner, in combination with the first tubular member 21 and the second tubular member 22, the space 23 communicating between the throttle ports 34a and the primary chamber S1 can be easily formed.

{Second embodiment}

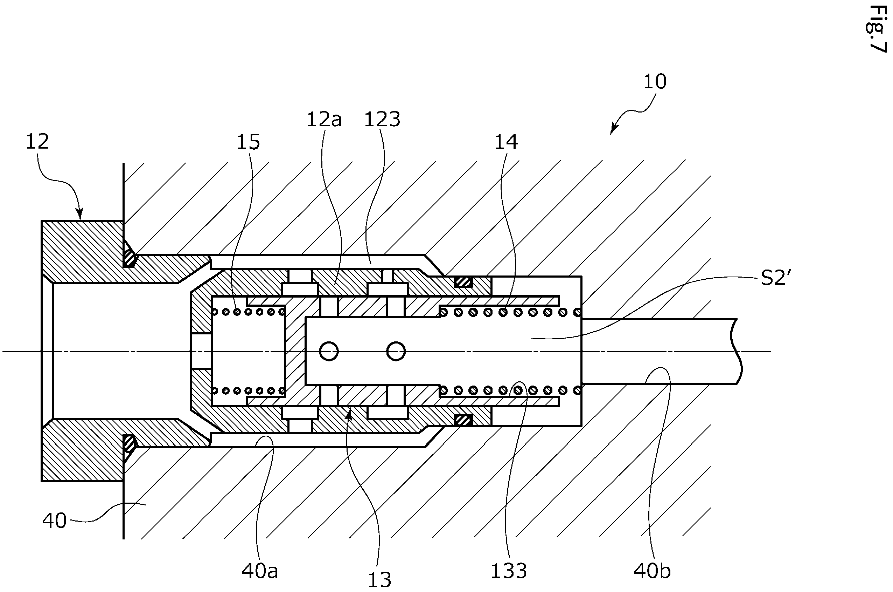

Next, a valve according to a second embodiment of the present invention will be described with reference to FIG. 7. Incidentally, the description of configurations that are the same as and overlap with the configurations of the embodiment described above will be omitted.

As illustrated in FIG. 7, a flow rate control valve 10 of the second embodiment is configured such that a tubular member 12, a spool 13, a flow rate control spring 14, and a check spring 15 are directly incorporated into a valve main body 40 such as a main control valve.

The tubular member 12 is connected to a mounting hole 41a of a valve main body 40 in a sealed manner by screwing.

An annular space 123 is formed between a small-diameter portion 12a of the tubular member 12 and the inner peripheral surface of the mounting hole 40a of the valve main body 40.

In addition, a recessed portion 133 of the spool 13 and the mounting hole 40a of the valve main body 40 constitute a secondary chamber S2'. The secondary chamber S2' is in communication with a secondary side inlet/outlet 40b provided in the valve main body 40.

The embodiments of the present invention have been described above with reference to the drawings; however, the specific configurations are not limited to the embodiments, and changes or additions that are made without departing from the scope of the present invention are included in the present invention.

For example, in the first and second embodiments, a mode in which the flow rate control spring and the check spring bias the spool from opposite sides in the axial direction has been provided as an example; however, the present invention is not limited thereto, and at least a flow rate control spring as biasing member configured to bias the spool toward the primary chamber side in the axial direction may be provided. In other words, the check spring may be omitted.

In addition, in the first and second embodiments, a mode in which the step portion is provided on the inner peripheral surface of the spool and the end of the flow rate control spring comes into contact with the step portion has been provided as an example; however, the step portion may be provided on the outer peripheral surface of the spool and the flow rate control spring may be externally fitted onto the spool.

In addition, in the first and second embodiments, a mode in which the open-close port is provided on the primary chamber side with respect to the spool, and the throttle port is provided on the secondary chamber side with respect to the open-close port has been provided as an example; however, the throttle port may be provided on the primary chamber side with respect to the spool, and the open-close port may be provided on the secondary chamber side with respect to the throttle port.

In addition, in the first and second embodiments, the flow path communicating between the throttle port and the primary chamber is provided to bypass the check spring; however, the flow path may be provided to cross the check spring.

In addition, a mode in which the flow rate control spring and the check spring are compression springs has been provided as an example, they may be tension springs. In this case, the flow rate control spring may be disposed on the primary chamber side with respect to the throttle port, and the check spring may be disposed on the secondary chamber side with respect to the throttle port. In addition, the biasing member is not limited to a spring, and may be an elastic body such as a synthetic resin, or a spring mechanism such as an air spring.

In addition, in the first and second embodiments, a mode in which oil is used as the fluid has been provided as an example; however, the fluid may be another liquid, a gas or a gas-liquid mixture.

In addition, in the first and second embodiments, a mode in which the spool is provided with the open-close port has been provided as an example; however, the open-close port may not be provided, and the valve may control only the control flow stream.

In addition, in the first embodiment, a mode in which the orifice is provided in the small-diameter portion of the second tubular member has been provided as an example; however, the position of the orifice may be freely set, and the orifice may not be provided.

{REFERENCE SIGNS LIST}

| | |
|---|---|
| 1 | Flow rate control valve (valve) |
| 2 | Housing |
| 3 | Flow rate control spool |
| 4 | Flow rate control spring (biasing member) |
| 5 | Check spring (primary chamber side biasing member) |
| 10 | Flow rate control valve (valve) |
| 13 | Spool |
| 14 | Flow rate control spring |
| 15 | Check spring |
| 21 | First tubular member |
| 22 | Second tubular member |
| 22e | Communication hole (flow path) |
| 23 | Space (flow path) |
| 34a | Throttle port |
| 34b | Open-close port |
| 36 | Step portion |
| 40 | Valve main body |
| 221 | Orifice |
| 222 | Hole |
| S1 | Primary chamber |
| S2, S2' | Secondary chamber |
| V1 | Flow control mechanism |
| V2 | Open-close mechanism |

**Claims**

1. A valve comprising:

   a housing;
   a spool having a throttle port, disposed in the housing to be movable in an axial direction, and partitioning off the housing into a primary chamber and a secondary chamber; and
   a biasing member configured to bias the spool toward a primary chamber side in an axial direction, wherein
   the spool operates in the axial direction due to a pressure difference between the primary chamber and the secondary chamber, and
   the biasing member is disposed on the primary chamber side or a secondary chamber side with respect to the throttle port.

2. The valve according to claim 1, wherein
   the spool has a step portion with which an end of the biasing member comes into contact.

3. The valve according to claim 2, wherein
   the step portion is provided on an inner peripheral surface of the spool.

4. The valve according to claim 1, wherein

   the spool is further provided with an open-close port that switches a communication state between the primary chamber and the secondary chamber, and
   the biasing member is disposed on the secondary chamber side with respect to the open-close port.

5. The valve according to any one of claims 1 to 4, further comprising a primary chamber side biasing member configured to bias the spool toward the secondary chamber side in the axial direction, wherein
   the throttle port and the primary chamber are in communication with each other via a flow path that bypasses the primary chamber side biasing member.

Fig.1

Fig.2

PRIMARY SIDE

SECONDARY SIDE

V2

V1

Fig.3

Fig.4

Fig.5

DIFFERENTIAL PRESSURE ACROSS ORIFICE AND OPENING PORTION (P1-P3)

## Fig.6

Fig.7

<table>
<tr><td align="center">**INTERNATIONAL SEARCH REPORT**</td><td>International application No.<br><br>**PCT/JP2023/021679**</td></tr>
</table>

**A.     CLASSIFICATION OF SUBJECT MATTER**

*F16K 17/30*(2006.01)i; *F16K 3/24*(2006.01)i; *F16K 31/363*(2006.01)i
FI:     F16K17/30 B; F16K3/24 D; F16K31/363

According to International Patent Classification (IPC) or to both national classification and IPC

**B.     FIELDS SEARCHED**

Minimum documentation searched (classification system followed by classification symbols)

F16K17/30; F16K3/24; F16K31/363

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
|---|---|---|
| X | Microfilm of the specification and drawings annexed to the request of Japanese Utility Model Application No. 135598/1985 (Laid-open No. 44305/1987) (HITACHI CONSTRUCTION MACHINERY CO., LTD.) 17 March 1987 (1987-03-17), description, page 7, line 19 to page 11, line 18, fig. 1, 2 | 1-5 |
| X | Microfilm of the specification and drawings annexed to the request of Japanese Utility Model Application No. 24598/1976 (Laid-open No. 116726/1977) (TOYO UMPANKI CO., LTD.) 05 September 1977 (1977-09-05), description, page 6, lines 4-14, fig. 1-3 | 1-3 |
| A | | 4-5 |

☐ Further documents are listed in the continuation of Box C.          ☑ See patent family annex.

| | | |
|---|---|---|
| * | Special categories of cited documents: | |
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/021679**

| Patent document cited in search report | | | Publication date (day/month/year) | Patent family member(s) | | | Publication date (day/month/year) |
|---|---|---|---|---|---|---|---|
| JP | 62-44305 | U1 | 17 March 1987 | US | 4753158 | A | |
| | | | | column 4, line 19 to column 6, line 51, fig. 4 | | | |
| | | | | CN | 1039476 | A | |
| | | | | KR | 87-3318 | A | |
| JP | 52-116726 | U1 | 05 September 1977 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62025137 A

- JP 4007415 Y